# EUROPEAN PATENT SPECIFICATION

(11) **EP 3 333 579 B1**
(45) Date of publication and mention of the grant of the patent: **19.06.2019**
(21) Application number: 17205652.5
(22) Date of filing: 06.12.2017
(51) Int. Cl.: G01P 15/125

(54) **PHYSICAL QUANTITY SENSOR, PHYSICAL QUANTITY SENSOR DEVICE, ELECTRONIC APPARATUS, AND VEHICLE**
PHYSISCHER MENGENSENSOR, VORRICHTUNG MIT PHYSISCHEM MENGENSENSOR, ELEKTRONISCHE VORRICHTUNG UND FAHRZEUG
CAPTEUR DE QUANTITÉ PHYSIQUE, DISPOSITIF DE CAPTEUR DE QUANTITÉ PHYSIQUE, APPAREIL ÉLECTRONIQUE ET VÉHICULE

(30) Priority: 07.12.2016 JP 2016237917
(43) Date of publication of application: 13.06.2018
(73) Proprietor: Seiko Epson Corporation, Tokyo 160-8801 (JP)
(72) Inventor: Kigure, Shota, Nagano, 392-8502 (JP)
(74) Representative: Hoffmann Eitle

(56) References cited:
- EP-A2- 2 514 712
- US-A1- 2012 267 150
- US-A1- 2016 130 135

## Description

### BACKGROUND

### 1. Technical Field

The present invention relates to a physical quantity sensor, a physical quantity sensor device, an electronic apparatus, and a vehicle.

### 2. Related Art

For example, a configuration disclosed in International Publication No. 2010/032821 is known as an acceleration sensor capable of detecting acceleration. The acceleration sensor of International Publication No. 2010/032821 includes acceleration sensor elements and a support substrate and a wiring substrate disposed between the acceleration sensor elements. The acceleration sensor elements include a support unit fixed to the support substrate, a movable electrode unit which is displaceable in a detection axis direction with respect to the support unit, and a fixed electrode unit fixed to the support substrate. The acceleration sensor that has this configuration can detect acceleration based on a change in electrostatic capacitance formed between the fixed electrode unit and the variable electrode unit.

In the acceleration sensor of International Publication No. 2010/032821, the support unit includes a bond portion bonded on the upper surface of the support unit with an insulation layer and a bond portion bonded on the lower surface of the support unit with a connection metal layer.

However, in the acceleration sensor of International Publication No. 2010/032821, the support unit is bonded with only the connection metal layer on the lower surface of the support unit. Therefore, stress caused due to a difference in a coefficient of thermal expansion between the support unit and the connection metal layer easily occurs.

Since the bonding of the support unit and the connection metal layer is bonding of silicon and metal, there is also concern of a bonding strength being not sufficient.

Since the upper surface of the support unit is bonded to the support substrate with the insulation layer interposed therebetween, there is concern that bonding stress occurring due to the bonding of the support unit and the support substrate is applied to the support unit.

EP 2 514 712 A2 discloses a MEMS device including a proof mass coupled to and surrounding an immovable structure. The immovable structure includes fixed fingers extending outwardly from a body of the structure. The proof mass includes movable fingers, each of which is disposed between a pair of the fixed fingers. A central area of the body is coupled to an underlying substrate, with the remainder of the immovable structure and the proof mass being suspended above the substrate to largely isolate the MEMS device from package stress. Additionally, the ME so that the fixed fingers, the fixed fingers, and the movable fingers are electrically isolated from one another to yield a differential device configuration.

US 2016/130135 A1 discloses physical quantity sensor which includes a supporting substrate, an acceleration detecting element that is mounted on the supporting substrate, and a sealing substrate that is bonded to the supporting substrate, and seals the acceleration detecting element, in which a notch portion is formed in a portion of a bonded face to the supporting substrate, in the sealing substrate, and a filling material that is configured by a material which is different from a material configuring the sealing substrate, is arranged in the notch portion.

US 2012/267150 A1 discloses a functional element including a substrate having a principal surface, a groove portion (a first groove portion, a second groove portion) disposed on the principal surface, and a fixed electrode section (a first fixed electrode finger, a second fixed electrode finger) laid across the groove portion on the substrate, wherein, in the groove portion, a raised portion formed by using at least one of the substrate and the fixed electrode section is provided in a position overlapping with the fixed electrode section in a plan view, the raised portion has a bonded surface (an end face), a wiring line (a first wiring line, a second wiring line) is disposed on the bonded surface, and the substrate and the fixed electrode section are connected with the wiring line sandwiched between the substrate and the fixed electrode section.

Therefore, there is concern that stability of bonding of the connection metal layer and the insulation layer of the support unit is damaged or temperature characteristics deteriorate.

### SUMMARY

An advantage of some aspects of the invention is that it provides a physical quantity sensor, a physical quantity sensor device, an electronic apparatus, and a vehicle capable of reducing deterioration in temperature characteristics while reducing a reduction in a bonding strength of a support unit.

The invention can be implemented in the following configurations.

A physical quantity sensor according to the present invention is defined by claim 1.

With this configuration, it is possible to obtain the physical quantity sensor capable of reducing deterioration in the temperature characteristics while reducing a reduction in the bonding strength of the support unit. It is further possible to reduce the deterioration in the temperature characteristics more efficiently. It is also possible to reduce the deterioration in the temperature characteristics more efficiently while suppressing an increase in the size. A bonding strength of the base unit and the support portion can be sufficiently high, more excellent electric connection between the support portion and the wiring can be achieved, and the miniaturization of the physical quantity sensor can be further achieved.

Dependent claims relate to preferred embodiments.
According to some preferred embodiments, a length of the first bond portion is longer than a length of the suspension portion in a direction perpendicular to a direction in which the support unit and the suspension portion are aligned.

With this configuration, it is possible to reduce the deterioration in the temperature characteristics more efficiently.

According to some preferred embodiments, each corner of the first bond portion has a rounded form.

With this configuration, since stress concentration on each portion of the first bond portion is suppressed, for example, the support portion can be prevented from being exfoliated from the base unit because of the corner becoming a trigger or crack can be prevented from being formed in the support portion or can be reduced.

According to some preferred embodiments, a length of the first overhang portion is longer than a length of the second overhang portion in a direction in which the first and second overhang portions are aligned.

According to some preferred embodiments, the first bond portion includes a part of an outer edge of the support unit in the plan view.

With this configuration, it is possible to set the first bond portion to be larger while maintaining the size of the first and second overhang portions without increasing the support portion.

The present invention also relates to a physical quantity sensor device. It includes the physical quantity sensor in accordance with any of the described embodiments.

With this configuration, it is possible to obtain the effects of the above-described physical quantity sensor, and thus it is possible to obtain the physical quantity sensor device with high reliability.

The present invention further relates to an electronic apparatus. It includes the physical quantity sensor in accordance with any of the described embodiments.

With this configuration, it is possible to obtain the effects of the above-described physical quantity sensor, and thus it is possible to obtain the electronic apparatus with high reliability.

A vehicle according to the present invention includes the physical quantity sensor and is defined by claim 9.

With this configuration, it is possible to obtain the effects of the above-described physical quantity sensor, and thus it is possible to obtain the vehicle with high reliability.

### BRIEF DESCRIPTION OF THE DRAWINGS

The invention will be described with reference to the accompanying drawings, wherein like numbers reference like elements.
Fig. 1 is a plan view illustrating a physical quantity sensor according to a first embodiment of the invention.
Fig. 2 is a sectional view taken along the line A-A of Fig. 1.
Fig. 3 is a partially enlarged plan view illustrating the physical quantity sensor illustrated in Fig. 1.
Fig. 4 is a partially enlarged sectional view illustrating the physical quantity sensor illustrated in Fig. 1.
Fig. 5 is a partially enlarged sectional view illustrating the physical quantity sensor illustrated in Fig. 1.
Fig. 6 is a graph illustrating a relation between the length of a first overhang portion and stress applied to a suspension portion.
Fig. 7 is a sectional view illustrating a physical quantity sensor according to a second embodiment of the invention.
Fig. 8 is a partially enlarged plan view illustrating the physical quantity sensor illustrated in Fig. 7.
Fig. 9 is a plan view illustrating a physical quantity sensor according to a third embodiment of the invention.
Fig. 10 is a sectional view illustrating a physical quantity sensor device according to a fourth embodiment of the invention.
Fig. 11 is a perspective view illustrating an electronic apparatus according to a fifth embodiment of the invention.
Fig. 12 is a perspective view illustrating an electronic apparatus according to a sixth embodiment of the invention.
Fig. 13 is a perspective view illustrating an electronic apparatus according to a seventh embodiment of the invention.
Fig. 14 is a perspective view illustrating a vehicle according to an eighth embodiment of the invention.

### DESCRIPTION OF EXEMPLARY EMBODIMENTS

Hereinafter, a physical quantity sensor, a physical quantity sensor device, an electronic apparatus, and a vehicle according to the invention will be described in detail according to embodiments illustrated in the appended drawings.

### First Embodiment

First, a physical quantity sensor according to a first embodiment of the invention will be described.

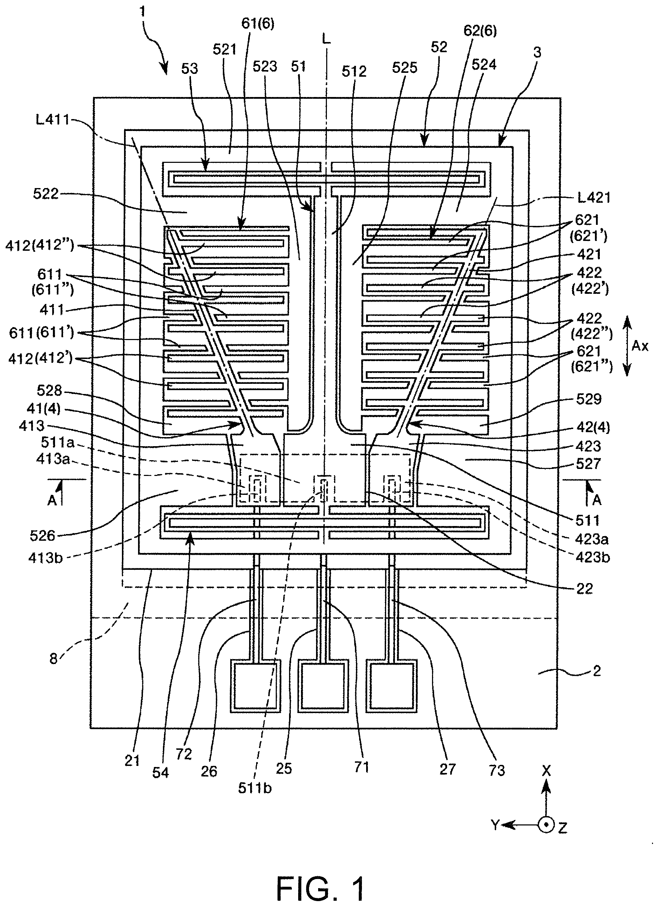

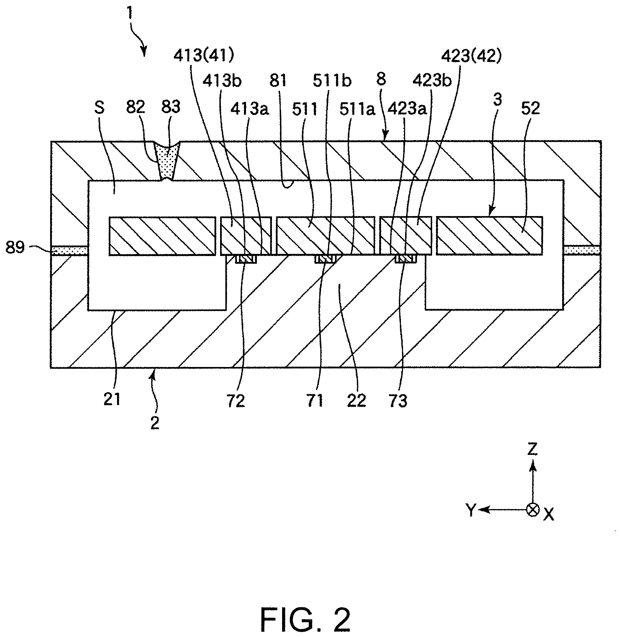

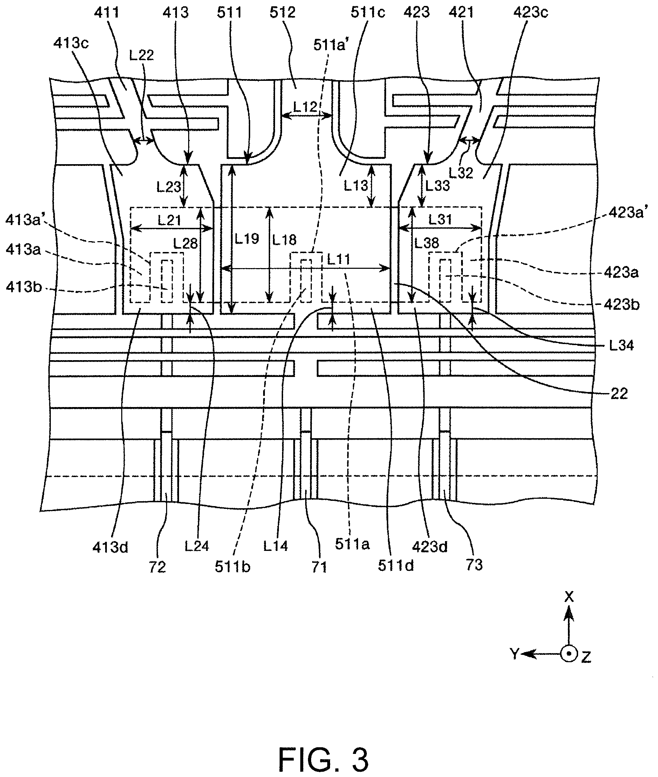

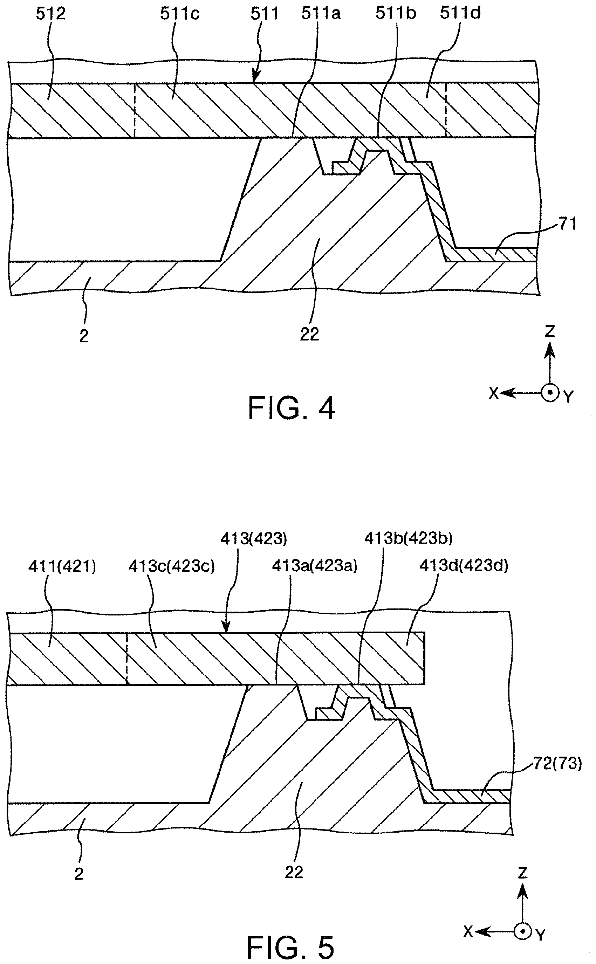

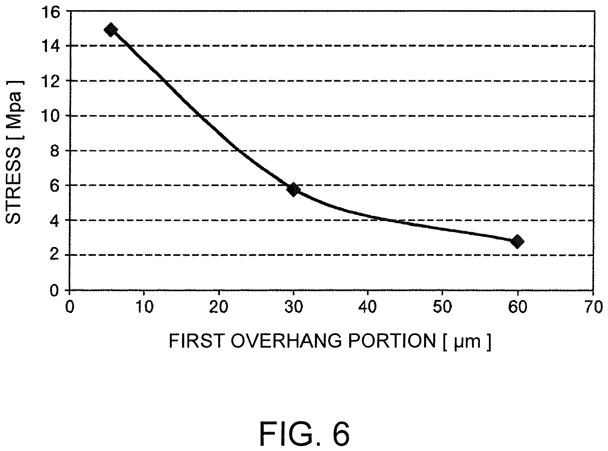

Fig. 1 is a plan view illustrating a physical quantity sensor according to a first embodiment of the invention. Fig. 2 is a sectional view taken along the line A-A of Fig. 1. Fig. 3 is a partially enlarged plan view illustrating the physical quantity sensor illustrated in Fig. 1. Figs. 4 and 5 are partially enlarged sectional views illustrating the physical quantity sensor illustrated in Fig. 1. Fig. 6 is a graph illustrating a relation between the length of a first overhang portion and stress applied to a suspension portion. Hereinafter, to facilitate description, the front side of the sheet surface in Figs. 1 and 3 and the upper side in Figs. 2, 4, and 5 are referred to a "top" and the rear side of the sheet surface in Figs. 1 and 3 and the lower side in Figs. 2, 4, and 5 are referred to as a "bottom". As illustrated in Figs. 1 to 5, three axes perpendicular to each other are referred to as the X, Y, and Z axes. A direction parallel to the X axis is also referred to as an "X axis direction", a direction parallel to the Y axis is also referred to as a "Y axis direction", and a direction parallel to the Z axis is also referred to as a "Z axis direction. The front end side of the arrow on each axis is referred to as a "positive side" and an opposite side is also referred to as a "negative side".

A physical quantity sensor 1 illustrated in Fig. 1 is an acceleration sensor capable of detecting acceleration Ax in the X axis direction. The physical quantity sensor 1 includes a base unit 2, a sensor element 3 disposed on the base unit 2, and a cover unit 8 bonded to the base unit 2 to cover the sensor element 3.

### Base Unit

As illustrated in Fig. 1, the base unit 2 is formed in a plate form with a rectangular shape in a plan view. The base unit 2 includes a depression 21 opened on the upper surface side. In a plan view in the Z axis direction, the depression 21 is formed to be larger than the sensor element 3 to contain the sensor element 3 on the inner side. The depression 21 functions as a clearance portion for preventing contact between the sensor element 3 and the base unit 2.

As illustrated in Fig. 2, the base unit 2 includes a mount portion 22 that has a projection shape and is installed on the bottom surface of the depression 21. The sensor element 3 is bonded to the mount portion 22. As illustrated in Fig. 1, the base unit 2 includes grooves 25, 26, 27 opened on the upper surface side. One end of each of the grooves 25, 26, and 27 is located outside the cover unit 8 and the other end of each of the grooves 25, 26, and 27 is connected to the depression 21.

As the foregoing base unit 2, for example, a glass substrate formed of a glass material (for example, borosilicate glass such as pyrex glass (registered trademark)) that contains alkali metal ions (mobile ions) can be used. Thus, for example, depending on a constituent material of the cover unit 8, the base unit 2 and the cover unit 8 can be bonded by anodic bonding. Thus, the base unit 2 and the cover unit 8 can be bonded rigidly. Since the base unit 2 with optical transparency can be obtained, a state of the sensor element 3 can be viewed through the base unit 2 from the outside of the physical quantity sensor 1.

Here, the base unit 2 is not limited to a glass substrate. For example, a silicon substrate or a ceramics substrate may be used. When a silicon substrate is used, it is preferable to use a silicon substrate with high resistance or to use a silicon substrate in which a silicon oxide film (insulation oxide) is formed on the surface by thermal oxidation from the viewpoint of preventing short-circuiting.

As illustrated in Fig. 1, wirings 71, 72, and 73 are installed in the grooves 25, 26, and 27, respectively. One end of each of the wirings 71, 72, and 73 in the grooves 25, 26, 27 is exposed outside of the cover unit 8 and functions as a terminal electrically connected to an external apparatus. As illustrated in Fig. 2, the other end of each of the wirings 71, 72, and 73 is extracted to the mount portion 22 via the depression 21. The wirings 71, 72, and 73 are electrically connected to the sensor element 3 on the mount portion 22.

A constituent material of the wirings 71, 72, and 73 is not particularly limited. For example, a metal material such as gold (Au), silver (Ag), platinum (Pt), palladium (Pd), iridium (Ir), copper (Cu), aluminum (Al), nickel (Ni), a titanium (Ti), or tungsten (W), an alloy containing such a metal material, or an oxide-based transparent conductive material such as indium tin oxide (ITO), indium zinc oxide (IZO), ZnO, or IGZO can be exemplified. One or two or more thereof can be combined to be used (for example, as a stacked body of two or more layers).

### Cover Unit

As illustrated in Fig. 1, the cover unit 8 is formed in a plate form with a rectangular shape in a plan view. As illustrated in Fig. 2, the cover unit 8 includes a depression 81 opened on the lower surface side. The cover unit 8 is bonded to the base unit 2 so that the sensor element 3 is accommodated inside the depression 81. An accommodation space S for accommodating the sensor element 3 is formed by the cover unit 8 and the base unit 2.

As illustrated in Fig. 2, the cover unit 8 includes a communication hole 82 communicating with the inside and the outside of the accommodation space S. Thus, the accommodation space S can be replaced with a desired atmosphere via the communication hole 82. A sealing member 83 is disposed in the communication hole 82 and the communication hole 82 is sealed by the sealing member 83.

The sealing member 83 is not particularly limited as long as the communication hole 82 can be sealed. For example, any of various alloys such as a gold (Au)/tin (Sn)-based alloy, a gold (Au)/germanium (Ge)-based alloy, and gold (Au)/aluminum (Al)-based alloy or a glass material such as low-melting point glass can be used.

The accommodation space S seals an inert gas such as nitrogen, helium, or argon and is preferably nearly in an atmospheric pressure at a use temperature (about -40°C to 80°C) . When the accommodation space S is in the atmospheric pressure, viscous resistance increases, a damping effect is exerted, and thus vibration of a movable portion 52 included in the sensor element 3 can be converted (stopped) quickly. Therefore, detection precision of acceleration of the physical quantity sensor 1 is improved.

In the embodiment, the cover unit 8 is configured as a silicon substrate. Here, the cover unit 8 is not limited to a silicon substrate. For example, a glass substrate or a ceramic substrate may be used. A method of bonding the base unit 2 to the cover unit 8 is not particularly limited and may be appropriately selected depending on the materials of the base unit 2 and the cover unit 8. For example, anodic bonding, activation bonding in which bonding surfaces activated by plasma irradiation are bonded, bonding by a bonding material such as a glass frit, and diffusion bonding in which metal films formed on the upper surface of the base unit 2 and the lower surface of the cover unit 8 are bonded can be exemplified.

In the embodiment, as illustrated in Fig. 2, the base unit 2 and the cover unit 8 are bonded with a glass frit 89 (low-melting point glass) which is an example of a bonding material interposed therebetween. In a state in which the base unit 2 and the cover unit 8 are superimposed, the inside and the outside of the accommodation space S communicate via the grooves 25, 26, and 27. However, by using the glass frit 89, it is possible to bond the base unit 2 to the cover unit 8 and seal the grooves 25, 26, and 27. Thus, the accommodation space S can be airtight-sealed more easily. When the base unit 2 and the cover unit 8 are bonded by anodic bonding or the like (a bonding method in which the grooves 25, 26, and 27 may not be sealed), the grooves 25, 26, and 27 can be blocked by a SiO₂ film formed by a CVD method, for example, using TEOS (tetraethoxysilane).

### Sensor Element

As illustrated in Fig. 1, the sensor element 3 includes a fixed electrode unit 4 fixed to the base unit 2, a movable unit support unit 51 fixed to the base unit 2, a movable unit 52 displaceable with respect to the movable unit support unit 51 in the X axis direction, spring units 53 and 54 connecting the movable unit support unit 51 and the movable unit 52, and a movable electrode unit 6 installed in the movable unit 52. The fixed electrode unit 4 includes a first fixed electrode unit 41 and a second fixed electrode unit 42. The movable electrode unit 6 includes a first movable electrode unit 61 and a second movable electrode unit 62. Of the units, the movable unit support unit 51, the movable unit 52, the spring units 53 and 54, and the movable electrode unit 6 are integrated.

The sensor element 3 can be formed, for example, by patterning a silicon substrate doped with impurities such as phosphorus (P) or boron (B). The sensor element 3 is bonded to the base unit 2 (the mount unit 22) by anodic bonding. Here, the method of bonding the material of the sensor element 3 or the sensor element 3 to the base unit 2 is not particularly limited.

The thickness of the sensor element 3 is not particularly limited. For example, in the embodiment, the thickness of the sensor element 3 is equal to or greater than 20 µm and equal to or less than 50 µm. Thus, the sensor element 3 can be configured to be thin while sufficiently maintaining a mechanical strength of the sensor element 3. Therefore, it is possible to achieve in miniaturization (low profile) of the physical quantity sensor 1.

As illustrated in Fig. 1, the movable unit support unit 51 is located between the first fixed electrode unit 41 and the second fixed electrode unit 42. The movable unit support unit 51 includes a support portion 511 fixed to the mount unit 22 and a suspension portion 512 connected to the support portion 511. As illustrated in Fig. 2, the movable unit support unit 51 is electrically connected to a wiring 71 in the support portion 511.

The suspension portion 512 is located with respect to the support portion 511 on a positive side of the X axis direction and is formed in a rectangular shape extending in the X axis direction. The end of the suspension portion 512 on the negative side of the X axis direction is connected to the support unit 511. The width (a length in the Y axis direction) of the suspension portion 512 is less than the width (a length in the Y axis direction) of the support portion 511. Thus, it is possible to achieve miniaturization of the suspension portion 512 and increase the mass of the movable unit 52 without increasing the size of the movable unit 52 located in the periphery of the suspension portion 512. Therefore, it is possible to detect a physical quantity with higher precision while suppressing an increase in the size of the sensor element 3. Hereinafter, in a plan view in the Z axis direction, an imaginary axis bisecting the suspension portion 512 in the Y axis direction is assumed to be a central axis L.

As illustrated in Fig. 1, the movable unit 52 is formed in a frame shape in a plan view in the Z axis direction and surrounds the movable unit support unit 51, the spring units 53 and 54, and the first fixed electrode unit 41, and the second fixed electrode unit 42. In this way, by forming the movable unit 52 in the frame shape, it is possible to further increase the mass of the movable unit 52 while suppressing the size of the movable unit 52. Therefore, it is possible to detect a physical quantity with higher precision while suppressing an increase in the size of the sensor element 3.

The movable unit 52 includes a first opening 528 and second opening 529 arranged in the Y axis direction. Then, the first fixed electrode unit 41 and the first movable electrode unit 61 are disposed in the first opening 528, and the second fixed electrode unit 42 and the second movable electrode unit 62 are disposed in the second opening 529.

The shape of the movable unit 52 will be described in more detail. The movable unit 52 includes a frame 521 that surrounds the movable unit support unit 51, the spring units 53 and 54, the first fixed electrode unit 41, and the second fixed electrode unit 42; a first Y axis extension portion 522 that is located with respect to the first opening 528 on the positive side of the X axis direction and extends from the frame 521 on the negative side of the Y axis direction; a first X axis extension portion 523 that extends from the front end of the first Y axis extension portion 522 on the negative side of the X axis direction; a second Y axis extension portion 524 that is located with respect to the second opening 529 on the positive side of the X axis direction and extends from the frame 521 on the positive side of the Y axis direction; and a second X axis extension portion 525 that extends from the front end of the second Y axis extension portion 524 on the negative side of the X axis direction. The first Y axis extension portion 522 and the second Y axis extension portion 524 are disposed near the spring unit 53 along the spring unit 53. The first X axis extension portion 523 and the second X axis extension portion 525 are located near the movable unit support unit 51 and are disposed along the movable unit support unit 51.

The movable unit 52 includes a first protrusion portion 526 that protrudes from the frame 521 in the first opening 528 to be buried in a remaining space of the first opening 528 and a second protrusion portion 527 that protrudes from the frame 521 in the second opening 529 to be buried in a remaining space of the second opening 529. In this way, by forming the first protrusion portion 526 and the second protrusion portion 527, it is possible to further increase the mass of the movable unit 52 without increasing the size of the movable unit 52. Therefore, the physical quantity sensor 1 with higher sensitivity is realized.

As illustrated in Fig. 1, the spring unit 53 connects the end of the movable unit 52 on the positive side of the X axis direction to the end of the movable unit support unit 51 on the positive side of the X axis direction. The spring unit 54 connects the end of the movable unit 52 on the negative side of the X axis direction to the end of the movable unit support unit 51 on the negative side of the X axis direction. Thus, since the movable unit 52 can be supported on both sides of the X axis direction, an attitude and a behavior of the movable unit 52 are stabilized. Therefore, it is possible to detect acceleration with higher precision.

As illustrated in Fig. 1, the fixed electrode unit 4 includes a first fixed electrode unit 41 located in the first opening 528 and the second fixed electrode unit 42 located in the second opening 529. The first fixed electrode 41 and the second fixed electrode unit 42 are disposed to be arranged in the Y axis direction.

The first fixed electrode unit 41 includes a support portion 413 that is fixed to the mount unit 22, a suspension portion 411 that is supported by the support portion 413, and a plurality of first fixed electrode fingers 412 that extend from the suspension portion 411 on both sides of the Y axis direction. As illustrated in Fig. 2, the first fixed electrode unit 41 is electrically connected to the wiring 72 in the support portion 413. The support portion 413, the suspension portion 411, and the first fixed electrode fingers 412 are formed to be integrated.

The suspension portion 411 is formed in a rod-like rectangular shape and one end of the suspension portion 411 is connected to the support portion 413. The suspension portion 411 extends in a direction inclined with respect to the X and Y axes in the plan view in the Z axis direction. More specifically, the suspension portion 411 is inclined so that a separate distance from the central axis L increases toward the front end side of the suspension portion 411. By disposing the suspension portion 411 in this way, the support portion 413 is easily disposed near the support portion 511. An inclination degree of an axis L411 of the suspension portion 411 with respect to the X axis is not particularly limited, is preferably equal to or greater than 10° and equal to or less than 45°, and is more preferably equal to or greater than 10° and equal to or less than 30°. Thus, it is possible to suppress expansion of the first fixed electrode unit 41 in the Y axis direction and it is possible to achieve miniaturization of the sensor element 3.

The first fixed electrode fingers 412 extend from the suspension portion 411 on both sides of the Y axis direction. That is, the first fixed electrode fingers 412 include a first fixed electrode finger 412' located with respect to the suspension portion 411 on the positive side of the Y axis direction and a first fixed electrode finger 412'' located on the negative side of the Y axis direction. The pluralities of first fixed electrode fingers 412' and 412" are installed to be separated from each other in the X axis direction.

The length (the length in the Y axis direction) of the plurality of first fixed electrode fingers 412' gradually decreases on the positive side of the X axis direction. On the other hand, the length (the length in the Y axis direction) of the plurality of first fixed electrode fingers 412" gradually increases on the positive side of the X axis direction.

As illustrated in Fig. 1, the second fixed electrode unit 42 includes a support portion 423 that is fixed to the mount unit 22, a suspension portion 421 that is supported by the support portion 423, and a plurality of second fixed electrode fingers 422 that extend from the suspension portion 421 on both sides of the Y axis direction. As illustrated in Fig. 2, the second fixed electrode unit 42 is electrically connected to the wiring 73 in the support portion 423. The support portion 423, the suspension portion 421, and the second fixed electrode fingers 422 are formed to be integrated.

The suspension portion 421 is formed in a rod-like rectangular shape and one end of the suspension portion 421 is connected to the support portion 423. The suspension portion 421 extends in a direction inclined with respect to the X and Y axes in the plan view in the Z axis direction. More specifically, the suspension portion 421 is inclined so that a separate distance from the central axis L increases toward the front end side of the suspension portion 421. By disposing the suspension portion 421 in this way, the support portion 423 is easily disposed near the support portion 511. An inclination degree of an axis L421 of the suspension portion 421 with respect to the X axis is not particularly limited, is preferably equal to or greater than 10° and equal to or less than 45°, and is more preferably equal to or greater than 10° and equal to or less than 30°. Thus, it is possible to suppress expansion of the second fixed electrode unit 42 in the Y axis direction and it is possible to achieve miniaturization of the sensor element 3.

The second fixed electrode fingers 422 extend from the suspension portion 421 on both sides of the Y axis direction. That is, the second fixed electrode fingers 422 include a second fixed electrode finger 422' located with respect to the suspension portion 421 on the positive side of the Y axis direction and a second fixed electrode finger 422" located on the negative side of the Y axis direction. The pluralities of second fixed electrode fingers 422' and 422" are installed to be separated from each other in the X axis direction.

The length (the length in the Y axis direction) of the plurality of second fixed electrode fingers 422' gradually increases on the positive side of the X axis direction. On the other hand, the length (the length in the Y axis direction) of the plurality of second fixed electrode fingers 422" gradually decreases on the positive side of the X axis direction.

As illustrated in Fig. 1, the movable electrode unit 6 includes the first movable electrode unit 61 located in the first opening 528 and the second movable electrode unit 62 located in the second opening 529.

The first movable electrode unit 61 includes a plurality of first movable electrode fingers 611 that are located on both sides of the suspension portion 411 in the Y axis direction and extend in the Y axis direction. That is, the first movable electrode fingers 611 include a first movable electrode finger 611' that is located with respect to the suspension portion 411 on the positive side of the Y axis direction and a first movable electrode finger 611' that is located on the negative side of the Y axis direction. The pluralities of first movable electrode fingers 611' and 611" are installed to be separated from each other in the X axis direction.

Each first movable electrode finger 611 is located with respect to the corresponding first fixed electrode finger 412 on the positive side of the X axis direction and faces the first fixed electrode finger 412 with a gap interposed therebetween.

The length (the length in the Y axis direction) of the plurality of first movable electrode fingers 611' gradually decreases on the positive side of the X axis direction. On the other hand, the length (the length in the Y axis direction) of the plurality of first movable electrode fingers 611" gradually increases on the positive side of the X axis direction.

As illustrated in Fig. 1, the second movable electrode 62 includes a plurality of second movable electrode fingers 621 that are located on both sides of the suspension portion 421 in the Y axis direction and extend in the Y axis direction. That is, the second movable electrode fingers 621 include a second movable electrode finger 621' that is located with respect to the suspension portion 421 on the positive side of the Y axis direction and a second movable electrode finger 621" that is located on the negative side of the Y axis direction. The pluralities of second movable electrode fingers 621' and 621" are installed to be separated from each other in the X axis direction.

Each second movable electrode finger 621 is located with respect to the corresponding second fixed electrode finger 422 on the negative side of the X axis direction and faces the second fixed electrode finger 422 with a gap interposed therebetween.

The length (the length in the Y axis direction) of the plurality of second movable electrode fingers 621' gradually increases on the positive side of the X axis direction. On the other hand, the length (the length in the Y axis direction) of the plurality of second movable electrode fingers 621" gradually decreases on the positive side of the X axis direction.

The configuration of the physical quantity sensor 1 has been described simply above. When acceleration is applied to the physical quantity sensor 1 in the X axis direction, the movable unit 52 is displaced in the X axis direction based on the magnitude of the acceleration while elastically deforming the spring units 53 and 54. With the displacement, the gap between the first movable electrode fingers 611 and the first fixed electrode fingers 412 and the gap between the second movable electrode fingers 621 and the second fixed electrode fingers 422 are changed. With the displacement, the magnitude of electrostatic capacitance between the first movable electrode fingers 611 and the first fixed electrode fingers 412 and the magnitude of electrostatic capacitance between the second movable electrode fingers 621 and the second fixed electrode fingers 422 are changed. Therefore, it is possible to detect acceleration based on the change in the electrostatic capacitance.

In particular, in the embodiment, each first movable electrode finger 611 is located with respect to the corresponding first fixed electrode finger 412 on the positive side of the X axis direction. In contrast, each second movable electrode finger 621 is located with respect to the corresponding second fixed electrode finger 422 on the negative side of the X axis direction. That is, each first movable electrode finger 611 is located on one side of the X axis direction (a first direction) with respect to the pairing first fixed electrode finger 412 and each second movable electrode finger 621 is located on the other side of the X axis direction (the first direction) with respect to the pairing second fixed electrode finger 422. Therefore, when acceleration is applied in the X axis direction, the gap between the first movable electrode finger 611 and the first fixed electrode finger 412 is shortened and the gap between the second movable electrode finger 621 and the second fixed electrode finger 422 is widened. In contrast, the gap between the first movable electrode finger 611 and the first fixed electrode finger 412 is widened and the gap between the second movable electrode finger 621 and the second fixed electrode finger 422 is shortened. Accordingly, by performing differential calculation on a first detection signal obtained between the first fixed electrode finger 412 and the first movable electrode finger 611 and a second detection signal obtained between the second fixed electrode finger 422 and the second movable electrode finger 621, it is possible to cancel noise, and thus it is possible to detect acceleration with higher precision.

In the physical quantity sensor 1, it is possible to shorten the lengths of the electrode fingers 412, 422, 611, and 621 while forming sufficiently large electrostatic capacitance between the first fixed electrode finger 412 and the first movable electrode finger 611 and between the second fixed electrode finger 422 ad the second movable electrode finger 621. Therefore, excellent detection precision can be achieved and damage of the electrode fingers 412, 422, 611, and 621 is suppressed. Thus, the physical quantity sensor 1 capable of achieving excellent shock resistance is realized. As the damage of the electrode fingers 412, 422, 611, and 621 is suppressed, the thicknesses of the electrode fingers 412, 422, 611, and 621 can be thinned. Thus, it is possible to achieve miniaturization of the physical quantity sensor 1.

In particular, in the physical quantity sensor 1, the suspension portions 411 and 421 extend in a direction inclined with respect to the X and Y axes, respectively. Thus, since the much shorter first fixed electrode finger 412 is included in the plurality of shorter first fixed electrode fingers 412, it is more difficult for the first fixed electrode unit 41 to be damaged on the whole. Similarly, since the much shorter second fixed electrode finger 422 is included in the plurality of shorter second fixed electrode fingers 422, it is more difficult for the second fixed electrode unit 42 to be damaged on the whole. The same applies to the first movable electrode fingers 611 and the second movable electrode fingers 621. Therefore, damage of the electrode fingers 412, 422, 611, and 621 is more efficiently suppressed and the physical quantity sensor 1 capable of achieving more excellent shock resistance is realized.

Next, a configuration of a bond portion between the movable unit support unit 51 and the mount unit 22 (the base unit 2), a bond portion between the first fixed electrode unit 41 and the mount unit 22 (the base unit 2), and a bond portion between the second fixed electrode 42 and the mount unit 22 (the base unit 2) will be described in detail.

As illustrated in Figs. 3 and 4, the support portion 511 of the movable unit support unit 51 includes a first bond portion 511a bonded to the mount unit 22 and a second bond portion 511b bonded on the wiring 71. As described above, since the sensor element 3 and the base unit 2 are directly bonded by anodic bonding, the shape of the first bond portion 511a is substantially the same as the shape of a contact portion of the support portion 511 with the mount unit 22. Since the support portion 511 and the wiring 71 are directly bonded to each other with no member interposed therebetween, the shape of the second bond portion 511b is substantially the same as the shape of a contact portion of the support portion 511 with the wiring 71.

The support portion 511 includes a first overhang portion 511c that is located between the first bond portion 511a and the suspension portion 512 and is separated from the base unit 2. In this way, since the support portion 511 includes the first overhang portion 511c, thermal stress occurring in the first bond portion 511a (thermal stress caused due to a difference in a coefficient of thermal expansion between glass which is the constituent material of the base unit 2 and silicon which is the constituent material of the sensor element 3 and the same applies below) is absorbed and alleviated by the first overhang portion 511c and is rarely delivered to the suspension portion 512. Therefore, unwilling deformation of the suspension portion 512 caused due to the thermal stress is suppressed.

As illustrated in Figs. 3 and 5, the support portion 413 of the first fixed electrode unit 41 includes a first bond portion 413a bonded to the mount unit 22 and a second bond portion 413b bonded to the wiring 72. As described above, since the sensor element 3 and the base unit 2 are directly bonded by anodic bonding, the shape of the first bond portion 413a is substantially the same as the shape of a contact portion of the support portion 413 with the mount unit 22. Since the support portion 413 and the wiring 72 are directly bonded to each other with no member interposed therebetween, the shape of the second bond portion 413b is substantially the same as the shape of a contact portion of the support portion 413 with the wiring 72.

The support portion 413 includes a first overhang portion 413c that is located between the first bond portion 413a and the suspension portion 411 and is separated from the base unit 2. In this way, since the support portion 413 includes the first overhang portion 413c, thermal stress occurring in the first bond portion 413a is absorbed and alleviated by the first overhang portion 413c and is rarely delivered to the suspension portion 411. Therefore, unwilling deformation of the suspension portion 411 caused due to the thermal stress is suppressed.

As illustrated in Figs. 3 and 5, the support portion 423 of the second fixed electrode unit 42 includes a first bond portion 423a bonded to the mount unit 22 and a second bond portion 423b bonded to the wiring 73. As described above, since the sensor element 3 and the base unit 2 are directly bonded by anodic bonding, the shape of the first bond portion 423a is substantially the same as the shape of a contact portion of the support portion 423 with the mount unit 22. Since the support portion 423 and the wiring 73 are directly bonded to each other with no member interposed therebetween, the shape of the second bond portion 423b is substantially the same as the shape of a contact portion of the support portion 423 with the wiring 73.

The support portion 423 includes a first overhang portion 423c that is located between the first bond portion 423a and the suspension portion 421 and is separated from the base unit 2. In this way, since the support portion 423 includes the first overhang portion 423c, thermal stress occurring in the first bond portion 423a is absorbed and alleviated by the first overhang portion 423c and is rarely delivered to the suspension portion 421. Therefore, unwilling deformation of the suspension portion 421 caused due to the thermal stress is suppressed.

In this way, by suppressing deformation of the suspension portions 512, 411, and 421 caused due to the thermal stress, it is possible to suppress a change in relative positions of the first movable electrode fingers 611 and the first fixed electrode fingers 412 and a change in relative positions of the second movable electrode fingers 621 and the second fixed electrode fingers 422 in a natural state (a stop state without applying the acceleration Ax). Therefore, it is possible to suppress a change in electrostatic capacitance between the first movable electrode fingers 611 and the first fixed electrode fingers 412 and a change in electrostatic capacitance between the second movable electrode fingers 621 and the second fixed electrode fingers 422 in the natural state caused due to an environment temperature. Thus, it is possible to suppress deterioration in the temperature characteristics of the physical quantity sensor 1 and it is possible to detect acceleration Ax with higher precision.

Since the support portion 511 includes the second bond portion 511b, excellent electric connection of the support portion 511 and the wiring 71 is achieved while sufficiently ensuring a bonding strength of the support portion 511 and the mount unit 22. Similarly, since the support portion 413 includes the second bond portion 413b, excellent electric connection of the support portion 413 and the wiring 72 is achieved while sufficiently ensuring a bonding strength of the support portion 413 and the mount unit 22. In addition, since the support portion 423 includes the second bond portion 423b, excellent electric connection of the support portion 423 and the wiring 73 is achieved while sufficiently ensuring a bonding strength of the support portion 423 and the mount unit 22.

As described above, the physical quantity sensor 1 includes the base unit 2, the wirings 71, 72, and 73 that are disposed in the base unit 2, the support portion 511 that includes the first bond portion 511a bonded to the base unit 2 and the second bond portion 511b bonded to the wiring 71, the support portion 413 that includes the first bond portion 413a bonded to the base unit 2 and the second bond portion 413b bonded to the wiring 72, the support portion 423 that includes the first bond portion 423a bonded to the base unit 2 and the second bond portion 423b bonded to the wiring 73, the suspension portion 512 that is connected to the support portion 511, the suspension portion 411 that is connected to the support portion 413, the suspension portion 421 that is connected to the support portion 423, the first movable electrode fingers 611 and the second movable electrode finger 621 that serve as electrode fingers supported by the suspension portion 512, the first fixed electrode fingers 412 that serve as electrode fingers supported by the suspension portion 411, and the second fixed electrode fingers 422 that serve as electrode fingers supported by the suspension portion 421. The support portion 511 includes the first overhang portion 511c that is located between the first bond portion 511a and the suspension portion 512 and is separated from the base unit 2. The support portion 413 includes the first overhang portion 413c that is located between the first bond portion 413a and the suspension portion 411 and is separated from the base unit 2. The support portion 423 includes the first overhang portion 423c that is located between the first bond portion 423a and the suspension portion 421 and is separated from the base unit 2. In this configuration, as described above, it is possible to obtain the physical quantity sensor 1 capable of suppressing deterioration in the temperature characteristics while suppressing the deterioration in the bonding strength of the support portions 511, 413, and 423.

A length L13 of the first overhang portion 511c in the X axis direction (overhang direction) is not particularly limited and differs depending on the size of the support portion 511 or the like. For example, when L19 is the length of the support portion 511 in the X axis direction, L13 may be equal to or greater than 0.2 × L19 and equal to or less than 0.4 × L19. Thus, the above-described effect (that is, the effect of absorbing and alleviating the thermal stress) can be sufficiently exerted. Further, the considerable (unnecessary) increase in the size of the first overhang portion 511c can be prevented, deterioration in shock characteristics (a mechanical strength of the first overhang portion 511c) can be suppressed, and the size of the first bond portion 511a can be sufficiently ensured, the bonding strength of the support portion 511 and the mount unit 22 can be maintained sufficiently high. The same applies to a length L23 of the first overhang portion 413c in the X axis direction and a length L33 of the first overhang portion 423c in the X axis direction.

A length L18 of the first bond portion 511a in the X axis direction (overhang direction) is not particularly limited and differs depending on the size of the support portion 511. For example, when L19 is the length of the support portion 511 in the X axis direction, L18 may be equal to or greater than 0.4 × L19 and equal to or less than 0.7 × L19. Thus, the size of the first bond portion 511a can be sufficiently ensured, the bonding strength of the support portion 511 and the mount unit 22 can be maintained sufficiently high, it can be ensured that the length L13 of the first overhang portion 511c is sufficiently long, and the above-described effect (that is, the effect of absorbing and alleviating the thermal stress) can be sufficiently exerted. The same applies to a length L28 of the first bond portion 413a in the X axis direction and a length L38 of the first bond portion 423a in the X axis direction.

Here, the length L19 of the support portion 511 in the X axis direction is not particularly limited. For example, the length L19 of the support portion 511 is preferably equal to or greater than 80 µm and equal to or less than 120 µm and more preferably equal to or greater than 90 µm and equal to or less than 110 µm. Thus, it is possible to ensure that the first bond portion 511a and the first overhang portion 511c are each sufficiently long while suppressing the size of the support portion 511. In this case, the length L13 of the first overhang portion 511c is not particularly limited. For example, the length L13 of the first overhang portion 511c is preferably equal to or greater than 16 µm and equal to or less than 48 µm and more preferably equal to or greater than 18 µm and equal to or less than 44 µm. Here, Fig. 6 is a graph illustrating a relation between the length L13 of the first overhang portion 511c and stress applied to the suspension portion 512 in a model in which the length L19 of the support portion 511 is 100 µm. As understood from this drawing, the stress is steeply lowered in a range in which the length L13 of the first overhang portion 511c is equal to or less than 30 µm (that is, L13 ≤ 0.3 × L19) and the stress is lowered gently in a range in which the length L13 is greater than 30 µm (that is, L13 > 0.3 × L19). From the graph, it can be understood that the length L13 of the first overhang portion 511c is preferably in a range about 30 µm including 30 µm (that is, L13 = 0.3 × L19), that is, as described above, equal to or greater than 0.2 × L19 and equal to or less than 0.4 × L19 to exert excellent stress alleviation characteristics while preventing the excessive increase in the size of the first overhang portion 511c.

In the embodiment, the support portions 511, 413, and 423 each include the first overhang portion, but at least one of the support portions 511, 413, and 423 may include the first overhang portion. That is, one or two of the first overhang portions 511c, 413c, and 423c may be omitted.

As illustrated in Fig. 3, the length L11 of the first bond portion 511a in the Y axis direction (a direction perpendicular to the X axis direction which is the alignment direction of the support portion 511 and the suspension portion 512) is longer than the length L12 of the suspension portion 512. Thus, it is possible to allow thermal stress occurring in the first bond portion 511a to be rarely delivered by the suspension portion 512 while maintaining the bonding strength of the support portion 511 and the mount unit 22 sufficiently high. Similarly, a length L21 of the first bond portion 413a in the Y axis direction is longer than a length L22 of the suspension portion 411. Thus, it is possible to allow thermal stress occurring in the first bond portion 413a to be rarely delivered by the suspension portion 411 while maintaining the bonding strength of the support portion 413 and the mount unit 22 sufficiently high. Similarly, a length L31 of the first bond portion 423a in the Y axis direction is longer than a length L32 of the suspension portion 421. Thus, it is possible to allow thermal stress occurring in the first bond portion 423a to be rarely delivered by the suspension portion 421 while maintaining the bonding strength of the support portion 423 and the mount unit 22 sufficiently high. Therefore, in the physical quantity sensor 1, it is possible to suppress the deterioration in the temperature characteristics more efficiently.

In the movable unit support unit 51, a relation between the length L11 of the first bond portion 511a and the length L12 of the suspension portion 512 is not particularly limited. L11 = L12 may be satisfied or L11 < L12 may be satisfied. In the first fixed electrode unit 41, a relation between the length L21 of the first bond portion 413a and the length L22 of the suspension portion 411 is not particularly limited. L21 = L22 may be satisfied or L21 < L22 may be satisfied. In the second fixed electrode unit 42, a relation between the length L31 of the first bond portion 423a and the length L32 of the suspension portion 421 is not particularly limited. L31 = L32 may be satisfied or L31 < L32 may be satisfied.

As illustrated in Fig. 3, the support portion 511 includes the second overhang portion 511d that is located opposite (on the negative side of the X axis direction) to the first overhang portion 511c with respect to the first bond portion 511a and is separated from the base unit 2. Since the second overhang portion 511d can also absorb and alleviate the thermal stress occurring in the first bond portion 511a, the thermal stress occurring in the first bond portion 511a can be rarely delivered by the suspension portion 512. Similarly, the support portion 413 includes a second overhang portion 413d that is located opposite (on the negative side of the X axis direction) to the first overhang portion 413c with respect to the first bond portion 413a and is separated from the base unit 2. Since the second overhang portion 413d can also absorb and alleviate the thermal stress occurring in the first bond portion 413a, the thermal stress occurring in the first bond portion 413a can be rarely delivered by the suspension portion 411. Similarly, the support portion 423 includes a second overhang portion 423d that is located opposite (on the negative side of the X axis direction) to the first overhang portion 423c with respect to the first bond portion 423a and is separated from the base unit 2. Since the second overhang portion 423d can also absorb and alleviate the thermal stress occurring in the first bond portion 423a, the thermal stress occurring in the first bond portion 423a can be rarely delivered by the suspension portion 421. Therefore, in the physical quantity sensor 1, it is possible to suppress the deterioration in the temperature characteristics more efficiently.

The support portion 511 may not include the second overhang portion 511d. Similarly, the support portion 413 may not include the second overhang portion 413d and the support portion 423 may not include the second overhang portion 423d.

As illustrated in Fig. 3, the length L13 of the first overhang portion 511c in the X direction (the alignment direction of the first overhang portion 511c and the second overhang portion 511d) is longer than the length L14 of the second overhang portion 511d. Thus, it is possible to suppress an increase in the size of the second overhang portion 511d while suppressing the delivery of thermal stress to the suspension portion 512 efficiently. Similarly, the length L23 of the first overhang portion 413c in the X direction (the alignment direction of the first overhang portion 413c and the second overhang portion 413d) is longer than the length L24 of the second overhang portion 413d. Thus, it is possible to suppress an increase in the size of the second overhang portion 413d while suppressing the delivery of thermal stress to the suspension portion 411 efficiently. Similarly, the length L33 of the first overhang portion 423c in the X direction (the alignment direction of the first overhang portion 423c and the second overhang portion 423d) is longer than the length L34 of the second overhang portion 423d. Thus, it is possible to suppress an increase in the size of the second overhang portion 423d while suppressing the delivery of thermal stress to the suspension portion 421 efficiently. Therefore, in the physical quantity sensor 1, it is possible to suppress the deterioration in the temperature characteristics more efficiently while suppressing an increase in the size.

In the movable unit support unit 51, a relation between the length L13 of the first overhang portion 511c and the length L14 of the second overhang portion 511d is not particularly limited. L13 = L14 may be satisfied or L13 < L14 may be satisfied. In the first fixed electrode unit 41, a relation between the length L23 of the first overhang portion 413c and the length L24 of the second overhang portion 413d is not particularly limited either. L23 = L24 may be satisfied or L23 < L24 may be satisfied. In the second fixed electrode unit 42, a relation between the length L33 of the first overhang portion 423c and the length L34 of the second overhang portion 423d is not particularly limited either. L33 = L34 may be satisfied or L33 < L34 may be satisfied.

As illustrated in Fig. 3, in the support portion 511, the first bond portion 511a includes a notch portion 511a', and the second bond portion 511b is disposed in the notch portion 511a'. In this configuration, it is possible to achieve miniaturization of the support portion 511 while maintaining the first bond portion 511a and the second bond portion 511b sufficiently largely. Similarly, in the support portion 413, the first bond portion 413a includes a notch portion 413a', and the second bond portion 413b is disposed in the notch portion 413a'. In this configuration, it is possible to achieve miniaturization of the support portion 413 while maintaining the first bond portion 413a and the second bond portion 413b sufficiently largely. Similarly, in the support portion 423, the first bond portion 423a includes a notch portion 423a' , and the second bond portion 423b is disposed in the notch portion 423a'. In this configuration, it is possible to achieve miniaturization of the support portion 423 while maintaining the first bond portion 423a and the second bond portion 423b sufficiently largely. Therefore, the bonding strength of the base unit 2 and the sensor element 3 (the support portions 511, 413, and 423) can be sufficiently high, the more excellent electric connection between the sensor element 3 and the wirings 71, 72, and 73 can be achieved, and the miniaturization of the physical quantity sensor 1 can be further achieved.

The first bond portion 511a may not include the notch portion 511a'. Similarly, the first bond portion 413a may not include the notch portion 413a' and the first bond portion 423a may not include the notch portion 423a'.

As illustrated in Fig. 3, in the support portion 511, the first bond portion 511a includes a part of an outer edge of the support portion 511 in the plan view in the Z axis direction. Specifically, both ends of the first bond portion 511a in the Y axis direction overlap with the outer edge of the support portion 511 in the plan view in the Z axis direction. In this configuration, since the length of the first bond portion 511a in the Y axis direction can be set to be longer, the first bond portion 511a can be set to be large without increasing the support portion 511 and while maintaining the sizes of the first overhang portion 511c and the second overhang portion 511d. Therefore, it is possible to increase bonding strength of the support portion 511 and the mount unit 22. Here, only one end of the first bond portion 511a in the Y axis direction may overlap with the outer edge of the support portion 511 or neither of the ends of the first bond portion 511a in the Y axis direction may overlap with the outer edge of the support portion 511.

Similarly, in the support portion 413, the first bond portion 413a includes a part of an outer edge of the support portion 413 in the plan view in the Z axis direction. Specifically, the end of the first bond portion 413a on the negative side of the Y axis direction overlaps with the outer edge of the support portion 413 in the plan view in the Z axis direction. In this configuration, since the length of the first bond portion 413a in the Y axis direction can be set to be longer, the first bond portion 413a can be set to be large without increasing the support portion 413 and while maintaining the sizes of the first overhang portion 413c and the second overhang portion 413d. Therefore, it is possible to increase bonding strength of the support portion 413 and the mount unit 22. Here, both ends of the first bond portion 413a in the Y axis direction may overlap with the outer edge of the support portion 413 or neither of the ends of the first bond portion 413a in the Y axis direction may overlap with the outer edge of the support portion 413.

Similarly, in the support portion 423, the first bond portion 423a includes a part of an outer edge of the support portion 423 in the plan view in the Z axis direction. Specifically, the end of the first bond portion 423a on the positive side of the Y axis direction overlaps with the outer edge of the support portion 423 in the plan view in the Z axis direction. In this configuration, since the length of the first bond portion 423a in the Y axis direction can be set to be longer, the first bond portion 423a can be set to be large without increasing the support portion 423 and while maintaining the sizes of the first overhang portion 423c and the second overhang portion 423d. Therefore, it is possible to increase bonding strength of the support portion 423 and the mount unit 22. Here, both ends of the first bond portion 423a in the Y axis direction may overlap with the outer edge of the support portion 423 or neither of the ends of the first bond portion 423a in the Y axis direction may overlap with the outer edge of the support portion 423.

### Second Embodiment

Next, a physical quantity sensor according to a second embodiment of the invention will be described.

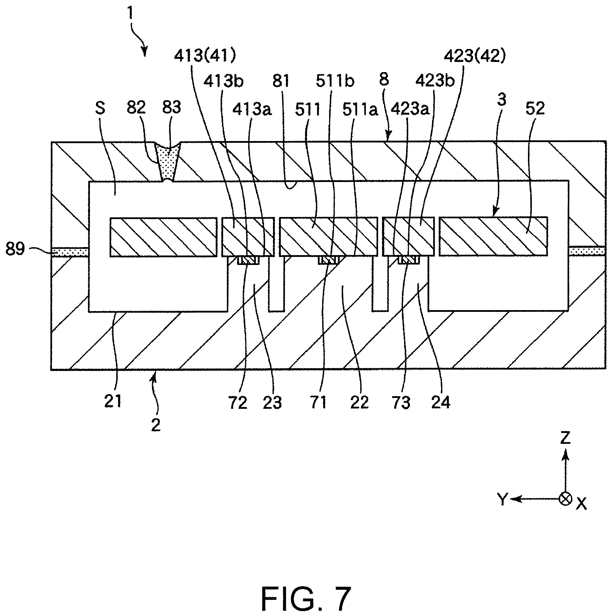

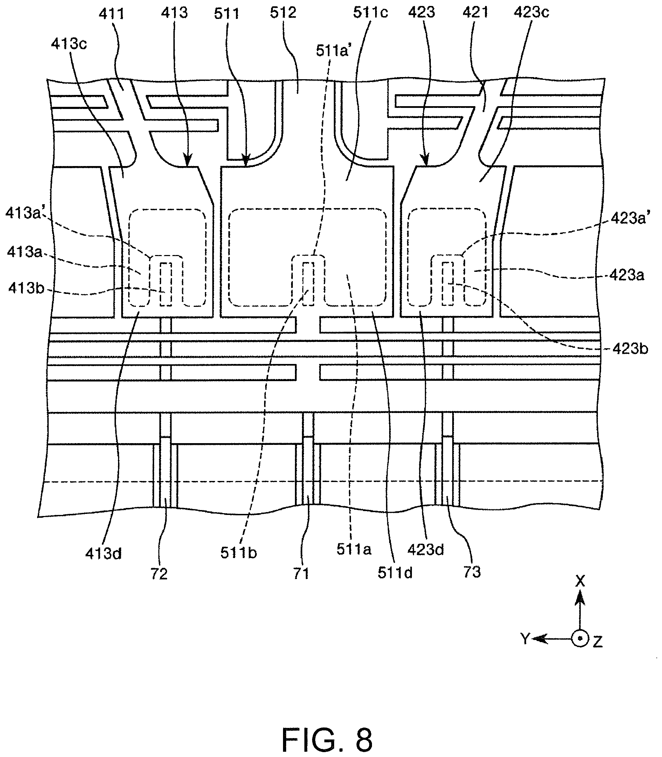

Fig. 7 is a sectional view illustrating the physical quantity sensor according to the second embodiment of the invention. Fig. 8 is a partially enlarged plan view illustrating the physical quantity sensor illustrated in Fig. 7.

A physical quantity sensor 1 according to the embodiment is mainly the same as the physical quantity sensor 1 according to the above-described first embodiment except that configurations of first bond portions 511a, 413a, and 423a are different.

In the following description, in the physical quantity sensor 1 according to the second embodiment, differences from the above-described first embodiment will be described mainly and the same factors will not be described. In Figs. 7 and 8, the same reference numerals are given to the same configurations as those of the above-described first embodiment.

As illustrated in Fig. 7, the base unit 2 includes three mount units 22, 23, and 24 installed in the depression 21. The mount units 22, 23, and 24 can also be said to be mount units obtained by dividing the mount unit 22 according to the above-described first embodiment into three pieces in the Y axis direction. The wiring 71 is extracted to the mount unit 22, the wiring 72 is extracted to the mount unit 23, and the wiring 73 is extracted to the mount unit 24. The support portion 511 is bonded to the mount unit 22, the support portion 413 is bonded to the mount unit 23, and the support portion 423 is bonded to the mount unit 24.

As illustrated in Fig. 8, in the support portion 511, the whole circumference of the first bond portion 511a is surrounded by the support portion 511 in the plan view in the Z axis direction. That is, the first bond portion 511a does not include the outer edge of the support portion 511 in the plan view in the Z axis direction. In this configuration, for example, even when mask shift occurs and a position of the support portion 511 formed in the mount unit 22 is shifted from a predetermined position at the time of patterning a silicon substrate bonded to the base unit 2 to form the sensor element 3, the circumference portion of the first bond portion 511a allows the shift. Thus, it is possible to suppress a decrease in the area of the first bond portion 511a. Therefore, it is possible to maintain the bonding strength of the support portion 511 and the mount unit 22.

Similarly, in the support portion 413, the whole circumference of the first bond portion 413a is surrounded by the support portion 413 in the plan view in the Z axis direction. In this configuration, as in the above-described support portion 511, even when mask shift occurs, it is possible to maintain the bonding strength of the support portion 413 and the mount unit 23.

Similarly, in the support portion 423, the whole circumference of the first bond portion 423a is surrounded by the support portion 423 in the plan view in the Z axis direction. In this configuration, as in the above-described support portion 511, even when mask shift occurs, it is possible to maintain the bonding strength of the support portion 423 and the mount unit 24.

In the support portion 511, the first bond portion 511a has rounded corners. More specifically, the first bond portion 511a has a substantially rectangular form except for the notch portion 511a' in the plan view in the Z axis direction and each corner is rounded. In this configuration, since stress concentration on the corners of the first bond portion 511a is suppressed, for example, the support portion 511 can be prevented from being exfoliated from the mount portion 22 (the base unit 2) because of the corner becoming a trigger or crack can be prevented from being formed in the support portion 511.

Similarly, in the support portion 413, the first bond portion 413a has rounded corners. More specifically, the first bond portion 413a has a substantially rectangular form except for the notch portion 413a' in the plan view in the Z axis direction and each corner is rounded. In this configuration, since stress concentration on the corners of the first bond portion 413a is suppressed, for example, the support portion 413 can be prevented from being exfoliated from the mount portion 23 because of the corner becoming a trigger or crack can be prevented from being formed in the support portion 413.

Similarly, in the support portion 423, the first bond portion 423a has rounded corners. More specifically, the first bond portion 423a has a substantially rectangular form except for the notch portion 423a' in the plan view in the Z axis direction and each corner is rounded. In this configuration, since stress concentration on the corners of the first bond portion 423a is suppressed, for example, the support portion 423 can be prevented from being exfoliated from the mount portion 24 because of the corner becoming a trigger or crack can be prevented from being formed in the support portion 423.

Therefore, in this configuration, the physical quantity sensor 1 with a high mechanical strength is realized.

Even in the second embodiment, it is possible to obtain the same effects as those of the above-described first embodiment.

### Third Embodiment

Next, a physical quantity sensor according to a third embodiment of the invention will be described.

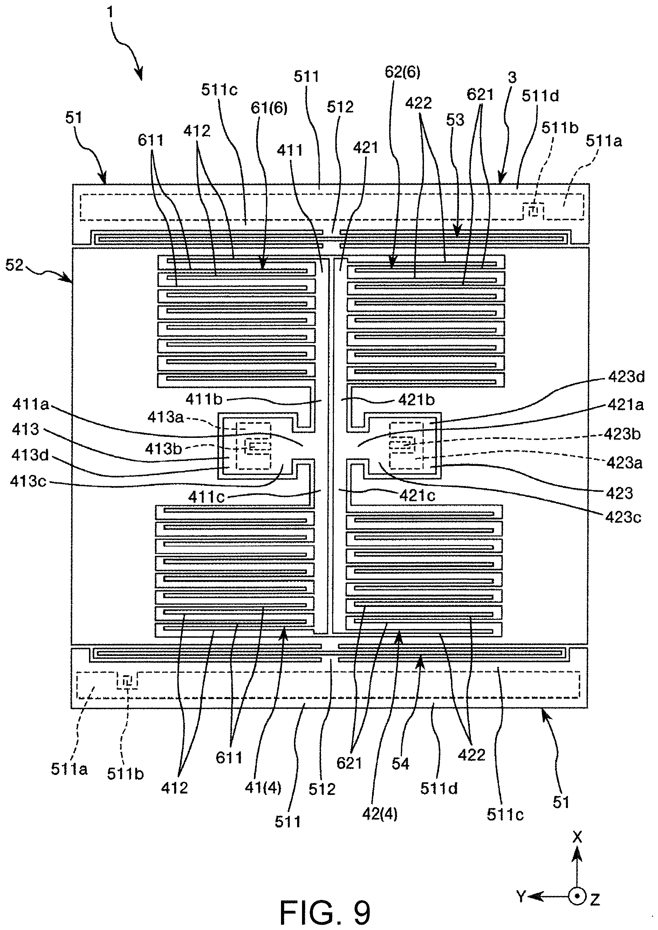

Fig. 9 is a plan view illustrating the physical quantity sensor according to the third embodiment of the invention. In Fig. 9, to facilitate the description, the base unit, the cover unit, and the wirings are not illustrated and only the sensor element is illustrated.

A physical quantity sensor 1 according to the embodiment is mainly the same as the physical quantity sensor 1 according to the above-described first embodiment except that configuration of the sensor element 3 is different.

In the following description, in the physical quantity sensor 1 according to the third embodiment, differences from the above-described second embodiment will be described mainly and the same factors will not be described. In Fig. 9, the same reference numerals are given to the same configurations as those of the above-described first embodiment.

As illustrated in Fig. 9, in the embodiment, the movable unit support units 51 are installed outside of the movable unit 52. One pair of movable unit support units 51 is installed to be aligned in the X axis direction to interpose the movable unit 52. Although not illustrated, one pair of mount units 22 is also installed to correspond to the one pair of the movable unit support units 51. The movable unit support unit 51 located on the positive side of the X axis direction is connected to the movable unit 52 via the spring unit 53 and the movable unit support unit 51 located on the negative side of the X axis direction is connected to the movable unit 52 via the spring unit 54.

Each movable unit support unit 51 includes the support portion 511 and the suspension portion 512, as in the above-described second embodiment. Each support unit 511 includes the first bond portion 511a bonded to the mount unit 22, the second bond portion 511b bonded to the wiring 71, the first overhang portion 511c, and the second overhang portion 511d.

The first fixed electrode unit 41 includes the support portion 413, the suspension portion 411, and the first fixed electrode fingers 412, as in the above-described second embodiment. The suspension portion 411 includes a portion 411a extending from the support portion 413 on the negative side of the Y axis direction and portions 411b and 411c extending from the front end of the portion 411a on both sides of the X axis direction. The plurality of first fixed electrode fingers 412 extend from the portions 411b and 411c on the positive side of the Y axis direction. The support portion 413 includes a first bond portion 413a bonded to the mount unit 23, the second bond portion 413b bonded to the wiring 72, a first overhang portion 413c disposed between the first bond portion 413a and the portion 411a, and a second overhang portion 413d disposed opposite to the first overhang portion 413c with respect to the first bond portion 413a.

The second fixed electrode unit 42 includes the support portion 423, the suspension portion 421, and the second fixed electrode fingers 422, as in the above-described second embodiment. The suspension portion 421 includes a portion 421a extending from the support portion 423 on the positive side of the Y axis direction and portions 421b and 421c extending from the front end of the portion 421a on both sides of the X axis direction. The plurality of second fixed electrode fingers 422 extend from the portions 421b and 421c on the negative side of the Y axis direction. The support portion 423 includes a first bond portion 423a bonded to the mount unit 24, the second bond portion 423b bonded to the wiring 73, a first overhang portion 423c disposed between the first bond portion 423a and the portion 421a, and a second overhang portion 423d disposed opposite to the first overhang portion 423c with respect to the first bond portion 423a.

Even in the third embodiment, it is possible to obtain the same effects as those of the above-described first embodiment. In particular, in the embodiment, since one pair of movable unit support units 51 is installed outside of the movable unit 52, it is possible to more stably support the movable unit 52. Therefore, an attitude and a behavior of the movable unit 52 are further stabilized, and thus it is possible to detect the acceleration Ax with higher precision.

### Fourth Embodiment

Next, a physical quantity sensor device according to a fourth embodiment of the invention will be described.

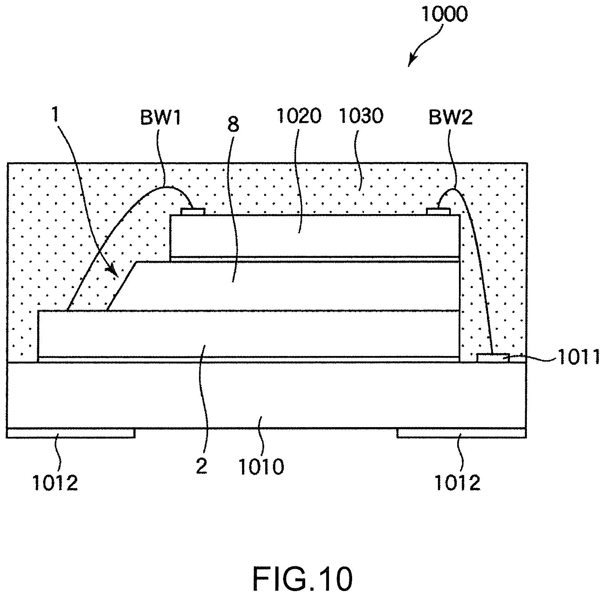

Fig. 10 is a sectional view illustrating the physical quantity sensor device according to the fourth embodiment of the invention. As illustrated in Fig. 10, a physical quantity sensor device 1000 includes a base substrate 1010, a physical quantity sensor 1 installed on the base substrate 1010, a circuit element 1020 (IC) installed on the physical quantity sensor 1, a bonding wire BW1 electrically connecting the physical quantity sensor 1 to the circuit element 1020, a bonding wire BW2 electrically connecting the base substrate 1010 to the circuit element 1020, and a mold unit 1030 molding the physical quantity sensor 1 and the circuit element 1020. Here, any of the physical quantity sensors according to the above-described first to third embodiment can be used as the physical quantity sensors 1.

The base substrate 1010 is a substrate that supports the physical quantity sensor 1 and is, for example, an interposer substrate. A plurality of connection terminals 1011 are disposed on the upper surface of the base substrate 1010 and a plurality of mount terminals 1012 are disposed on the lower surface of the base substrate 1010. In the base substrate 1010, internal wirings (not illustrated) are disposed. The connection terminals 1011 are electrically connected to the corresponding mount terminals 1012 via the internal wirings. The base substrate 1010 is not particularly limited. For example, a silicon substrate, a ceramic substrate, a resin substrate, a glass substrate, or a glass epoxy substrate can be used.

The physical quantity sensor 1 is disposed on the base substrate 1010 so that the base unit 2 is oriented on the lower side (the side of the base substrate 1010) . The physical quantity sensor 1 is bonded to the base substrate 1010 via a bonding member.

The circuit element 1020 is disposed on the physical quantity sensor 1. The circuit element 1020 is bonded to the cover unit 8 of the physical quantity sensor 1 via the bonding member. The circuit element 1020 is electrically connected to the wirings 71, 72, and 73 of the physical quantity sensor 1 via the bonding wire BW1 and is electrically connected to the connection terminals 1011 of the base substrate 1010 via the bonding wire BW2. The circuit element 1020 includes a driving circuit that drives the physical quantity sensor 1, a detection circuit that detects acceleration based on an output signal from the physical quantity sensor 1, or an output circuit that converts a signal from the detection circuit into a predetermined signal and outputs the predetermined signal, as necessary.

The mold unit 1030 molds the physical quantity sensor 1 and the circuit element 1020. Thus, it is possible to protect the physical quantity sensor 1 or the circuit element 1020 from moisture, dust, shock, or the like. The mold unit 1030 is not particularly limited. For example, a heat-curable epoxy resin can be used. For example, molding can be performed in accordance with a transfer molding method.

The foregoing physical quantity sensor device 1000 includes the physical quantity sensor 1. Therefore, it is possible to obtain the effects of the physical quantity sensor 1 and it is possible to obtain the physical quantity sensor device 1000 with high reliability.

The configuration of the physical quantity sensor device 1000 is not limited to the foregoing configuration. For example, the physical quantity sensor 1 may be configured to be accommodated in a ceramic package.

### Fifth Embodiment

Next, an electronic apparatus according to a fifth embodiment of the invention will be described.

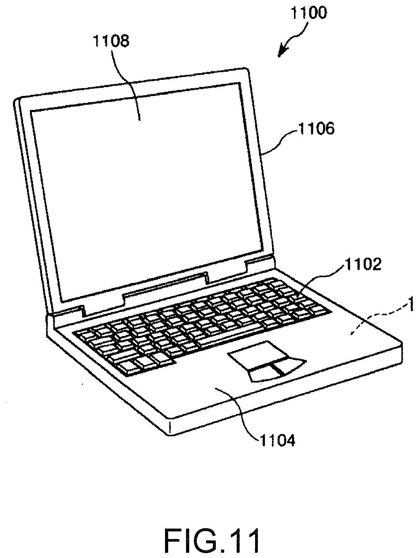

Fig. 11 is a perspective view illustrating the electronic apparatus according to the fifth embodiment of the invention.

A mobile (or notebook-type) personal computer 1100 illustrated in FIG. 11 is applied as an electronic apparatus that includes the physical quantity sensor according to the invention. In the drawing, the personal computer 1100 is configured to include a body unit 1104 including a keyboard 1102 and a display unit 1106 including a display unit 1108. The display unit 1106 is supported to be rotatable via a hinge structure unit with respect to the body unit 1104. The personal computer 1100 contains the physical quantity sensor 1 that functions as an acceleration sensor. Here, any of the physical quantity sensors according to the first to third embodiments can be used as the physical quantity sensor 1.

The personal computer 1100 (an electronic apparatus) includes the physical quantity sensor 1. Therefore, it is possible to obtain the effects of the above-described physical quantity sensor 1, and thus it is possible to achieve high reliability.

### Sixth Embodiment

Next, an electronic apparatus according to a sixth embodiment of the invention will be described.

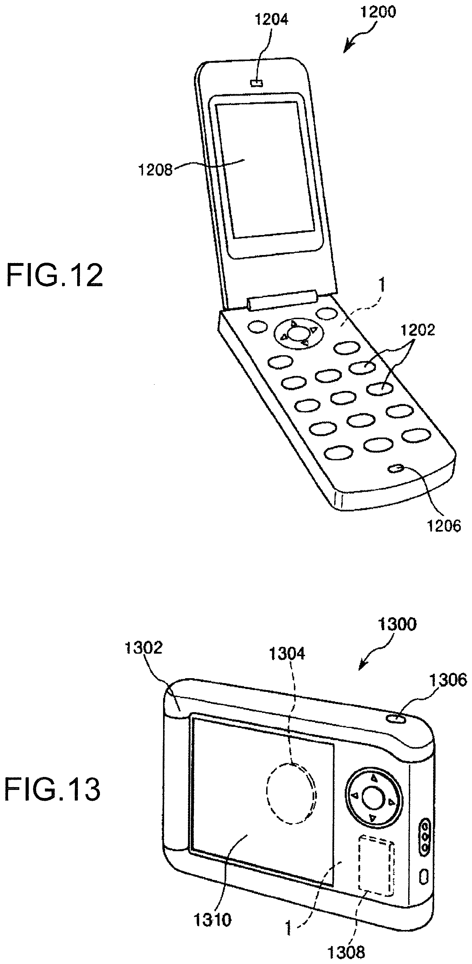

Fig. 12 is a perspective view illustrating the electronic apparatus according to the sixth embodiment of the invention.

A mobile phone 1200 (also including a PHS) illustrated in Fig. 12 is applied as an electronic apparatus that includes the physical quantity sensor according to the invention. In the drawing, the mobile phone 1200 includes an antenna (not illustrated), a plurality of operation buttons 1202, an earpiece 1204, and a mouth piece 1206. A display unit 1208 is disposed between the operation buttons 1202 and the earpiece 1204. The mobile phone 1200 contains the physical quantity sensor 1 that functions as an acceleration sensor. Here, any of the physical quantity sensors according to the above-described first to third embodiment can be used as the physical quantity sensors 1.

The mobile phone 1200 (an electronic apparatus) includes the physical quantity sensor 1. Therefore, it is possible to obtain the effects of the above-described physical quantity sensor 1, and thus it is possible to achieve high reliability.

### Seventh Embodiment

Next, an electronic apparatus according to a seventh embodiment of the invention will be described.

Fig. 13 is a perspective view illustrating the electronic apparatus according to the seventh embodiment of the invention.

A digital still camera 1300 illustrated in Fig. 13 is applied as an electronic apparatus that includes the physical quantity sensor according to the invention. In the drawing, a display unit 1310 is installed on the rear surface of a case (body) 1302 and is configured to perform display based on an imaging signal by a CCD. The display unit 1310 functions as a finder that displays a subject as an electronic image. A light-receiving unit 1304 including an optical lens (an imaging optical system) or a CCD is installed on the front surface side (the rear surface side in the drawing) of the case 1302. When a photographer confirms a subject image displayed on the display unit 1310 and presses a shutter button 1306, an imaging signal of the CCD at that time point is transferred and stored in the memory 1308. The digital still camera 1300 contains the physical quantity sensor 1 that functions as an acceleration sensor. Here, any of the physical quantity sensors according to the above-described first to third embodiment can be used as the physical quantity sensors 1.

The digital still camera 1300 (an electronic apparatus) includes the physical quantity sensor 1. Therefore, it is possible to obtain the effects of the above-described physical quantity sensor 1, and thus it is possible to achieve high reliability.

The electronic apparatus according to the invention can be applied not only to the above-described personal computer, the above-described mobile phone, and the digital still camera according to the embodiment, but also to, for example, a smartphone, a tablet terminal, a timepiece (including a smart timepiece), an ink jet ejection apparatus (for example, an ink jet printer), a laptop personal computer, a television, a wearable terminal such as a head-mounted display (HMD), a video camera, a video tape recorder, a car navigation apparatus, a pager, an electronic organizer (also including a communication function unit), an electronic dictionary, a calculator, an electronic game apparatus, a word processor, a workstation, a television telephone, a security television monitor, electronic binoculars, a POS terminal, a medical apparatus (for example, an electronic thermometer, a blood-pressure meter, a blood-sugar meter, an electrocardiographic apparatus, an ultrasonic diagnostic apparatus, or an electronic endoscope), a fish finder, various measurement apparatuses, a mobile terminal base station apparatus, meters (for example, meters for cars, airplanes, and ships), a flight simulator, and a network server.

### Eighth Embodiment

Next, a vehicle according to an eighth embodiment of the invention will be described.

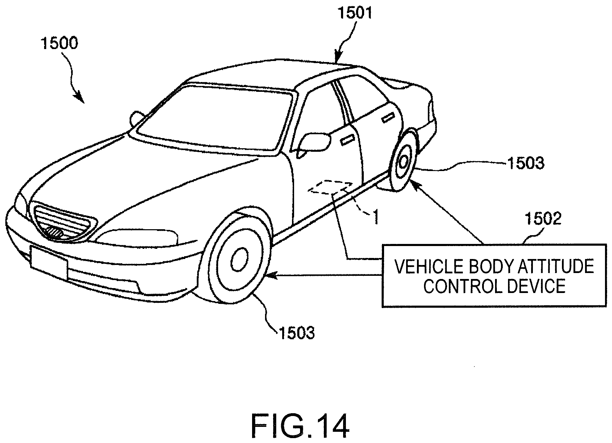

Fig. 14 is a perspective view illustrating the vehicle according to the eighth embodiment of the invention.

An automobile 1500 illustrated in Fig. 14 is an automobile to which a vehicle including the physical quantity sensor according to the invention is applied. In the drawing, the automobile 1500 contains the physical quantity sensor 1 that functions as an acceleration sensor. Thus, the physical quantity sensor 1 can detect an attitude of a vehicle body 1501. A detection signal of the physical quantity sensor 1 is supplied to a vehicle body attitude control device 1502. Then, the vehicle body attitude control device 1502 detects an attitude of the vehicle body 1501 based on the detection signal and can control hardness or softness of a suspension in accordance with a detection result or controls a brake of an individual wheel 1503. Here, any of the physical quantity sensors according to the above-described first to third embodiment can be used as the physical quantity sensors 1.

The automobile 1500 (a vehicle) includes the physical quantity sensor 1. Therefore, it is possible to obtain the effects of the above-described physical quantity sensor 1, and thus it is possible to achieve high reliability.

The physical quantity sensor 1 can also be broadly applied to a car navigation system, a car air conditioner, an antilock brake system (ABS), an air bag, a tire pressure monitoring system (TPMS), an engine control, and an electronic control unit (ECU) such as a battery monitor of a hybrid automobile or an electric automobile.

The vehicle is not limited to the automobile 1500, but can also be applied to, for example, an airplane, a ship, an AGV (an unmanned carrier), a bipedal walking robot, and an unmanned aircraft such as a drone.

The physical quantity sensor, the physical quantity sensor device, the electronic apparatus, and the vehicle according to the invention have been described according to the illustrated embodiments, but the invention is not limited thereto. The configuration of each unit can be substituted with any configuration with the same function. Any other constituent may be added to the invention. The above-described embodiments may be combined appropriately. In the above-described embodiments, the X and Y axis directions are perpendicular to each other, but the invention is not limited thereto. The X and Y axis directions may intersect each other.

In the above-described embodiments, the configuration of one sensor element has been described, but the number of element units may be plural. At this time, by disposing the plurality of element units so that detection axes are different from each other, it is possible to detect acceleration in a plurality of axis directions.

In the above-described embodiments, the acceleration sensor detecting acceleration has been described as the physical quantity sensor, but a physical quantity detected by the physical quantity sensor is not limited to acceleration.

## Claims

1. A physical quantity sensor comprising:
a base unit (2);
a wiring that is disposed in the base unit (2);
a support unit (51) that includes a first bond portion (511a) bonded to the base unit (2) and a second bond portion (511b) bonded to the wiring;
a suspension portion (512) that is connected to the support unit (51); and
an electrode finger (611, 621) that is supported by the suspension portion (512),
wherein the support unit (51) is located between the first bond portion and the suspension portion (512) in a plan view and includes a first overhang portion (511c) separated from the base unit (2),
wherein the support unit (51) includes a second overhang portion (511d) that is located opposite to the first overhang portion (511c) with respect to the first bond portion (511a) and is separated from the base unit (51) in the plan view,
**characterized in that**:
a length of the first overhang portion (511c) is longer than a length of the second overhang portion (511d) in a direction in which the first and second overhang portions (511c, 511d) are aligned in the plan view, and
the first bond portion (511a) includes a notch portion (511a'), and
wherein the second bond portion (511b) is disposed in the notch portion (511a') in the plan view.

2. The physical quantity sensor according to claim 1,
wherein a length of the first bond portion (511a) is longer than a length of the suspension portion (512) in a direction perpendicular to a direction in which the support unit (51) and the suspension portion (512) are aligned.

3. The physical quantity sensor according to claim 1 or 2,
wherein each corner of the first bond portion (511a) has a rounded form.

4. The physical quantity sensor according to any one of the preceding claims,
wherein the first bond portion (511a) includes a part of an outer edge of the support unit (51) in the plan view.

5. A physical quantity sensor device comprising:
the physical quantity sensor (1) according to any one of the preceding claims; and
a circuit element (1020) that is electrically connected to the physical quantity sensor (1).

6. The physical quantity sensor device according to claim 5,
wherein the physical quantity sensor (1) and the circuit element (1020) are accommodated in a ceramic package.

7. The physical quantity sensor device according to claim 5,
wherein the physical quantity sensor (1) and the circuit element (1020) are molded.

8. An electronic apparatus comprising:
the physical quantity sensor (1) according to any one of claims 1 to 4.

9. A vehicle comprising:
the physical quantity sensor (1) according to any one of claims 1 to 4; and
an attitude control device (1502) that is configured to detect an attitude based on a signal output from the physical quantity sensor (1) and to control the detected attitude.

## Patentansprüche

1. Physischer Mengensensor, umfassend:
eine Basiseinheit (2);
eine Verdrahtung, die in der Basiseinheit (2) angeordnet ist;
eine Trägereinheit (51), die einen ersten Verbindungsabschnitt (511a), der mit der Basiseinheit (2) verbunden ist, und einen zweiten Verbindungsabschnitt (511b), der mit der Verdrahtung verbunden ist, beinhaltet;
einen Aufhängungsabschnitt (512), der an der Trägereinheit (51) angeschlossen ist; und
einen Elektrodenfinger (611, 621), der von dem Aufhängungsabschnitt (512) getragen wird,
wobei sich die Trägereinheit (51) in einer Draufsicht zwischen dem ersten Verbindungsabschnitt und dem Aufhängungsabschnitt (512) befindet und einen ersten überhängenden Abschnitt (511c) beinhaltet, der von der Basiseinheit (2) getrennt ist,
wobei die Trägereinheit (51) einen zweiten überhängenden Abschnitt (511d) beinhaltet, der sich in Bezug auf den ersten Verbindungsabschnitt (511a) gegenüber dem überhängenden Abschnitt (511c) befindet und in der Draufsicht von der Basiseinheit (51) getrennt ist,
**dadurch gekennzeichnet, dass**:
eine Länge des ersten überhängenden Abschnitts (511c) länger als eine Länge des zweiten überhängenden Abschnitts (511d) in einer Richtung ist, in welcher der erste und der zweite überhängende Abschnitt (511c, 511d) in der Draufsicht ausgerichtet sind und
der erste Verbindungsabschnitt (511a) einen Kerbenabschnitt (511a') beinhaltet und
wobei der zweite Verbindungsabschnitt (511b) in der Draufsicht in dem Kerbenabschnitt (511a') angeordnet ist.

2. Physischer Mengensensor nach Anspruch 1,
wobei eine Länge des ersten Verbindungsabschnitts (511a) länger als eine Länge des Aufhängungsabschnitts (512) in einer Richtung senkrecht zu einer Richtung ist, in der die Trägereinheit (51) und der Aufhängungsabschnitt (512) ausgerichtet sind.

3. Physischer Mengensensor nach Anspruch 1 oder 2,
wobei jede Ecke des ersten Verbindungsabschnitts (511a) eine abgerundete Form aufweist.

4. Physischer Mengensensor nach einem der vorstehenden Ansprüche,
wobei der erste Verbindungsabschnitt (511a) in der Draufsicht einen Teil einer Außenkante der Trägereinheit (51) beinhaltet.

5. Physische Mengensensorvorrichtung, umfassend:
den physischen Mengensensor (1) nach einem der vorstehenden Ansprüche; und
ein Schaltungselement (1020), das elektrisch an den physischen Mengensensor (1) angeschlossen ist.

6. Physische Mengensensorvorrichtung nach Anspruch 5,
wobei der physische Mengensensor (1) und das Schaltungselement (1020) in einem Keramikgehäuse untergebracht sind.

7. Physische Mengensensorvorrichtung nach Anspruch 5,
wobei der physische Mengensensor (1) und das Schaltungselement (1020) gussgeformt sind.

8. Elektronische Einrichtung, umfassend:
den physischen Mengensensor (1) nach einem der Ansprüche 1 bis 4.

9. Fahrzeug, umfassend:
den physischen Mengensensor (1) nach einem der Ansprüche 1 bis 4; und
eine Positionssteuerungsvorrichtung (1502), die konfiguriert ist, um eine Position basierend auf einem Signal, das von dem physischen Mengensensor (1) ausgegeben wird, zu erfassen und die erfasste Position zu steuern.

## Revendications

1. Capteur de quantité physique comprenant :
une unité de base (2) ;
un câblage qui est disposé dans l'unité de base (2) ;
une unité de support (51) qui inclut une première portion de liaison (511a) liée à l'unité de base (2) et une seconde portion de liaison (511b) liée au câblage ;
une portion de suspension (512) qui est reliée à l'unité de support (51) ; et
un doigt formant électrode (611, 621) qui est supporté par la portion de suspension (512),
dans lequel l'unité de support (51) est située entre la première portion de liaison et la portion de suspension (512) dans une vue en plan et inclut une première portion en surplomb (511c) séparée de l'unité de base (2),
dans lequel l'unité de support (51) inclut une seconde portion en surplomb (511d) qui est située sur la première portion de liaison (511a) opposée à la première portion en surplomb (511c) et est séparée de l'unité de base (51) dans la vue en plan,
**caractérisé en ce que** :
une longueur de la première portion en surplomb (511c) est plus longue qu'une longueur de la seconde portion en surplomb (511d) dans une direction dans laquelle les première et seconde portions en surplomb (511c, 511d) sont alignées dans la vue en plan, et
la première portion de liaison (511a) inclut une portion en encoche (511a'), et
dans lequel la seconde portion de liaison (511b) est disposée dans la portion en encoche (511a') dans la vue en plan.

2. Capteur de quantité physique selon la revendication 1,
dans lequel une longueur de la première portion de liaison (511a) est plus longue qu'une longueur de la portion de suspension (512) dans une direction perpendiculaire à une direction dans laquelle l'unité de support (51) et la portion de suspension (512) sont alignées.

3. Capteur de quantité physique selon la revendication 1 ou 2,
dans lequel chaque angle de la première portion de liaison (511a) a une forme arrondie.

4. Capteur de quantité physique selon l'une quelconque des revendications précédentes,
dans lequel la première portion de liaison (511a) inclut une partie d'un bord extérieur de l'unité de support (51) dans la vue en plan.

5. Dispositif de capteur de quantité physique comprenant :
le capteur de quantité physique (1) selon l'une quelconque des revendications précédentes ; et
un élément de circuit (1020) qui est électriquement relié au capteur de quantité physique (1).

6. Dispositif de capteur de quantité physique selon la revendication 5,
dans lequel le capteur de quantité physique (1) et l'élément de circuit (1020) sont logés dans un boîtier céramique.

7. Dispositif de capteur de quantité physique selon la revendication 5,
dans lequel le capteur de quantité physique (1) et l'élément de circuit (1020) sont moulés.

8. Appareil électronique comprenant :
le capteur de quantité physique (1) selon l'une quelconque des revendications 1 à 4.

9. Véhicule comprenant :
le capteur de quantité physique (1) selon l'une quelconque des revendications 1 à 4 ; et
un dispositif de commande d'attitude (1502) qui est configuré pour détecter une attitude sur la base d'une sortie de signal en provenance du capteur de quantité physique (1) et pour commander l'attitude détectée.
